# EUROPÄISCHE PATENTSCHRIFT

(11) **EP 0 712 994 B1**
(45) Veröffentlichungstag und Bekanntmachung des Hinweises auf die Patenterteilung: **08.01.2003**
(21) Anmeldenummer: 94116249.7
(22) Anmeldetag: 14.10.1994
(51) Int. Cl.: F01C 1/063, F02B 53/02

(54) **Zweitaktkreiskolbenbrennkraftmaschine mit selbsteinstellendem Verdichtungsverhältnis**
Two stroke rotary internal combustion engine with automatically adjustable compression ratio
Moteur rotatif 2 temps à réglage automatique du taux de compression

(43) Veröffentlichungstag der Anmeldung: 22.05.1996
(73) Patentinhaber: Hones, Josef, Dipl.-Ing., D-86169 Augsburg (DE); Kudimov, Nikolay, Dr., 119146 Moscow (RU)
(72) Erfinder: Kirejev, Vladimir, N., SU-119146 Moscow (SU)
(74) Vertreter: Meissner, Bolte & Partner

(56) Entgegenhaltungen:
- DE-A- 2 008 556
- US-A- 3 446 120
- US-A- 3 935 841
- US-A- 3 938 480
- US-A- 4 664 078

## Beschreibung

Die Erfindung bezieht sich auf Verbrennungsmotoren und betrifft insbesondere Arbeitsverfahren der Kreiskolbenmotoren, welche als Antriebsanlagen bei diversen Beförderungsmitteln eingesetzt werden können.

Es ist ein Kreiskolbenmotor bekannt (s. Urheberschrift der UdSSR Nr. 1778334, Int. Kl. F 02 B 53/00), bei dem ein Gehäuse, zwei Kolbenpaare in Form von Flügeln, eine geteilte Welle und ein damit kraftschlüssig verbundener Läufer vorgesehen sind. Die Kolbenpaare führen eine Bewegung aus, welche die Bildung von Kammern zwischen den Flügeln bewirkt deren Volumen sich ständig ändert. Das wird dadurch erreicht, daß die Bewegung beider Kolbenpaare gegen einander ständig beschleunigt oder verlangsamt wird. Während des Betriebes dieses Motors entstehen sehr große Achsenlasten infolge des Mechanismus der Flügelverbindung, wodurch die Motorlaufzeit erheblich reduziert wird.

Es ist auch ein Verbrennungsmotor mit der hin- und hergehenden Pendelbewegung des Kolbens bekannt (s. Urheberschrift der UdSSR Nr. 1462007, Int. Kl. F 02 B 53/08), welcher als Prototyp anzusehen ist, bei dem der Kolben in dem Innenraum eines zylinderförmigen Gehäuses liegt und eine Arbeitskammer bildet und welcher in Form eines Flügels mit auf einer Welle festbefestigter Nabe ausgeführt ist. Der Kolben weist eine Aussparung auf, die auf der Seitenfläche der Nabe liegt, wobei ein Kolbenfenster zwischen der Aussparung und der Seitenfläche des im Gehäuse liegenden Stegs gebildet wird.

Der Motor arbeitet im Zweitakt-Arbeitsverfahren. Nach dem Einsaugen des Brenngemisches in die Druckkammer erfolgt in der Arbeitskammer die Verdichtung des Gemisches, wobei das Kolbenfenster mit einer Nase überdeckt wird. Nach der Entzündung des Brennstoffs in der Arbeitskammer bewegt sich der Kolben in der entgegengesetzten Richtung und macht die Auslaßöffnung frei; wobei die Nase das Kolbenfenster freimacht, wonach das Brenngemisch in Arbeitskammer strömt und Abgase zur Auslaßöffnung verdrängt und die Befüllung der Brennkammer mit einer frischen Brennstoffladung ermöglicht.

Während des Betriebes dieses Motors entstehen große Achsenlasten wegen der Asymmetrie und, was ausschlaggebend ist, bei der Entzündung erfolgt eine lokale Anzündung der Ladung nur, wodurch natürlicherweise keine vollständige Verbrennung der Ladung ermöglicht wird.

Aus der DE-A 2 008 556 ist ein Zweitakt-Kreiskolbenmotor mit pendelnden Winkelbewegungen eines Läufers und Selbstzündung mit selbsteinstellendem Verdichtungsverhältnis bekannt. Dieser Motor ist jedoch äußerst aufwendig in der Konstruktion.

Der Erfindung liegt die Aufgabe zugrunde, ein vereinfachtes Verfahren zum Betreiben eines Zweitaktkreiskolbenmotors bzw. einen solchen aufzuzeigen, wobei in einfacher Weise ein hoher Wirkungsgrad erzielbar ist.

Diese Aufgabe wird durch ein Verfahren bzw. ein Kreiskolbenmotor der beanspruchten Art gelöst.

Es wird also ein schwimmendes, d.h. selbsteinstellendes Verdichtungsverhältnis erzielt, was die Selbstentzündung eines Magergemisches unabhängig vom eingesetzten Treibstoff ermöglicht, wodurch eine vollständige Gemischverbrennung ermöglicht und der Schadstoffgehalt im Abgas wesentliche reduziert wird. Dank einer besonderen Formgebung der Arbeitskammer und der Anordnung von Ein- und Auslaßöffnungen wird die Mitnahme der Ladung in das Abgas vermieden.

Mit der vorliegenden Erfindung wird auch eine Erhöhung der Vergleichmäßigung des Brenngemisches vor dessen Einlaß in die Arbeitskammer erzielt. Eine hohe Gleichmäßigkeit ermöglicht in Verbindung mit der räumlichen Ladungszündung den höchstmöglichen Wirkungsgrad und ein umweltschonendes Abgas.

Grundgehalt der Erfindung besteht darin, daß für den Betrieb des Zweitaktkreiskolben-Kompressionsverbrennungsmotors mit selbsteinstellendem Verdichtungsverhältnis, der Arbeits- und Druckkammer aufweist, das Brenngemisch eingespritzt und bis zur Entzündung mit darauffolgendem Auslaß verdichtet wird, wobei ein Magergemisch bei Luftüberschußzahl von mindestens 1,7 zum Einsatz kommt, dank der Zwangsförderung durch gerippte Innenkanäle des Motorgehäuses verwirbelt, mit Motorabwärme erwärmt und auf diese Weise ein hochgleichmäßiges Brenngemisch erzeugt wird, welches anfangs in eine der gepaarten Arbeitskammern in umgekehrten Proportionalität bezüglich deren Rauminhaltsänderung eingeleitet und bis auf die Selbstentzündung verdichtet wird, wobei das Brenngemisch in die andere gepaarte Arbeitskammer eingeleitet wird, wo es bis auf die Selbstentzündung durch den während des Arbeitshubes erzeugten Bewegungsimpuls des Läufers verdichtet wird, wonach sich das Arbeitsspiel wiederholt.

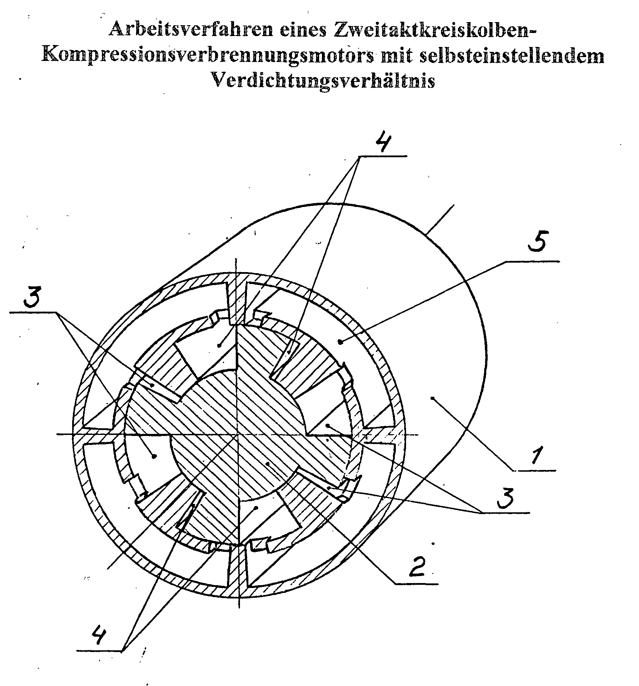

In der Zeichnung ist ein Zweistaktkreiskolben-Kompressionsverbrennungsmotor als Ausführungsbeispiel des vorgeschlagenen Verfahrens dargestellt.

Der Motor weist mehrflügelige Gehäuse 1 und Läufer 2 auf. Die dazwischen liegenden Innenräume bilden symmetrisch angeordnete gepaarte Druckkammer 3 und gepaarte Arbeitskammer 4, die miteinander durch gerippte Kanäle 5 im Motorgehäuse verbunden sind.

Das Brenngemisch wird in die Brennkammern 3 eingesaugt und für dessen Vergleichmäßigung wird es dank Zwangsförderung durch gerippte Innenkanäle des Motorgehäuses vorverwirbelt und mit Motorabwärme erwärmt, wonach es anfangs in eine der gepaarten Arbeitskammern 4 eingeleitet wird. Nach der anfänglichen Bewegung des Läufers 2 wird die Ladung mittels eines dessen Flügel bis zur Selbstentzündung verdichtet, wobei das Verdichtungsverhältnis selbständig in Abhängigkeit von der Brennstoffart einstellt; es erfolgt eine räumliche Anzündung des Brenngemisches. Während des Arbeitshubes erhält Läufer 2 einen Bewegungsimpuls und gleichzeitig wird in die andere gepaarte Arbeitskammer 4 das Brenngemisch eingeleitet, wo es bis zur Selbstentzündung verdichtet wird. Das Arbeitsspiel wiederholt sich und als Folge dessen führt der Läufer eine pendelnde Winkelbewegung aus.

Dank der symmetrischen Kammeranordnung widerstehen allen Trägheitskräften die Gasdrücke, d.h. die zusammenwirkenden Einzelteile keinen Kraftschluß haben. Unter Berücksichtigung der fehlenden Nebenvorrichtungen ermöglicht der vorgeschlagene Motor, einen für die Verbrennungsmotoren höchstmöglichen mechanischen Wirkungsgrad zu erzielen.

Dieser Motor vereinigt Vorteile von Zweitakt-Verdichtungsmotoren mit denen der Gasturbinenmotoren.

## Patentansprüche

1. Verfahren zum Betreiben eines 2-Takt-Kreiskolbenmotors mit pendelnden Winkelbewegungen eines Läufers (2) und Selbstzündung, mit selbst einstellendem Verdichtungsverhältnis, umfassend die Schritte:
a) Einsaugen eines Brenngemisches in eine erste von einem Paar von Druckkammern (3);
b) Fördern des Brenngemisches über Innenkanäle eines Motorgehäuses (1) in eine erste von einem Paar von Arbeitskammern (4);
c) Verdichten des Brenngemisches in der Arbeitskammer (4) bis zur Selbstzündung;
d) Durchführung eines Arbeitshubes der ersten Arbeitskammer (4) mit darauf folgendem Auslaß;
e) Durchführung der Schritte a) - c) in der zweiten Druckkammer (3) und Arbeitskammer (4) während des Arbeitshubes und Wiederholen der Schritte a) - e),
wobei das Brenngemisch während des Förderns in die Arbeitskammern (4) verwirbelt, erwärmt und radial nach außen in Kanäle (5) und aus den Kanälen (5) radial nach innen in die Arbeitskammern (4) geleitet wird.

2. Verfahren nach Anspruch 1,
**dadurch gekennzeichnet, daß**
das Brenngemisch mit einer Luftüberschußzahl von mindestens 1,7 eingestellt wird.

3. Verfahren nach Anspruch 1,
**dadurch gekennzeichnet, daß**
das Brenngemisch durch Motorabwärme erwärmt wird.

4. Verbrennungsmotor mit oszillierenden Winkelbewegungen eines Läufers (2) in einem Motorgehäuse (1) mit zwei gepaarten Arbeitskammern (4) zur Durchführung eines 2-Takt-Verbrennungsverfahrens mit Selbstzündung und selbst einstellendem Verdichtungsverhältnis umfassend
- zwei gepaarte Druckkammern (3), die durch den Läufer (2) und das Motorgehäuse (1) gebildet sind, und
- zwei im Motorgehäuse (1) gebildete Kanäle (5), welche jeweils mit einer Druckkammer (3) und einer von einem Paar von Arbeitskammern (4) derart in Verbindung stehen, daß bei einer vollständigen oszillierenden Winkelbewegung des Läufers (2) die folgenden Schritte durchgeführt werden:
a) Einsaugen eines Brenngemisches in die erste des Paars von Druckkammern (3);
b) Fördern des Brenngemisches über Innenkanäle eines Motorgehäuses (1) in die erste Arbeitskammer (4);
c) Verdichten des Brenngemisches in der Arbeitskammer (4) bis zur Selbstzündung;
d) Durchführung eines Arbeitshubes der ersten Arbeitskammer (4) mit darauf folgendem Auslaß; Durchführung der Schritte a) - c) in der zweiten Druckkammer (3) und Arbeitskammer (4) während des Arbeitshubes und Wiederholen der Schritte a)-e), wobei die Kanäle (5) radial außerhalb der Druckkammern (3) sowie der Arbeitskammern (4) angeordnet und
die Kanäle (5) verrippt sind.

5. Verbrennungsmotor nach Anspruch 4
**dadurch gekennzeichnet, daß** die Anordnung der Kammern (3, 4) derart symmetrisch getroffen ist, daß kein Kraftschluß der Einzelteile vorliegt.

## Claims

1. Method of running two-stroke rotary engine with rocking angular movement of rotor (2) and self-ignition with self-regulated compression index, including the following stages:
a) Suction of air-fuel mixture into first paired compression chamber (3);
b) Feeding of air-fuel mixture through internal channels of the engine case (1) into the first paired working chamber (4);
c) Compression of air-fuel mixture in the working chamber (4) up to self-ignition;
d) Running the working stroke of the first working chamber (4) with subsequent release:
e) Carrying out stages a) - c) in the second compression chamber (3) and workingchamber (4) during the working stroke and recurrence of stages a) - e), air-fuel mixture will be whirled during its feed to the working chambers (4), wormed up by heat emitted by the engine and passes in radial direction outside to channels (5) and from channels (5) it passes in radial direction to working chambers (4).

2. Method according to item 1,
is **characterized by**
use of air-fuel mixture, with excess air ratio not less than 1,7;

3. Method according to item 1,
is **characterized by** air-fuel mixture heating up by heat emitted by the engine.

4. The internal combustion engine with reciprocating angular movement of rotor (2) in the case (1) with two paired working chambers (4) for realization of two-stroke combustion process with self-ignition including
- Two paired compression chambers (3) which are formed by rotor (2) and the engine case (1), and
- Two channels (5) inside of the engine case (1) thus are connected to one compression chamber (3) and one working chamber (4) that at full reciprocating movement of rotor (2) the following operations are carried out:
a) suction of air-fuel mixture to the first paired compression chamber (3);
b) Feeding of air-fuel mixture through internal channels of the engine case (1) to The first paired working chamber (4);
c) Compression of air-fuel mixture in the working chamber (4) up to self-ignition;
d) Running of the working stroke of the first working chamber (4) with subsequent release;
Carrying out operations a) - c) in the second compression chamber (3) and working chamber (4) during the working strike and recurrence of operations a)-e), and
Channels (5) are located in radial direction outside of compression chambers (3) as well as outside of working chambers (4) and
channels (5) have ribbing.

5. The internal combustion engine according to item 4
is **characterized by** symmetric arrangement of chambers (3, 4) so that there was not any force closure between individual details.

## Revendications

1. Le mode d'exploitation du moteur de rotation à deux temps avec les mouvements d'angle basculants du rotor (2) et l'autoinflammation, avec le degré de compression établissant soi-meme, contenant les étapes suivantes:
a) L'aspiration du mélange combustible dans la première chambre de compression de vapeur (3),
b) L'admission du mélange combustible sur les chemins intérieurs du corps du moteur (1) dans la premiére chambre de travail de vapeur (4);
c) La compression du mélange combustible dans la chambre de travail (4) jusqu' à l'autoinflammation;
d) La réalisation de la course de travail de la première chambre de travail (4) avec l'échappement intérieur;
c) La réalisation des étapes a) - c) dans la deuxième chambre de compression (3) et dans la chambre de travail (4) pendant la course de travail et la reprise des étapes a) - e).
Pendant l'admission dans les chambres de travail (4) le mélange combustible se tourbillonne, se réchauffe et passe dans le sens radial dehors, dans les chemins (5) et des chemins (5), dans le sens radial, dans les chambres de travail (4).

2. Le mode conformément au point 1, caractérisant du fait qu'on utilise le mélange combustible dans lequel le coefficient de l'excédent de l'air est au mooins de 1,7.

3. Le mode conformément au point 1 caractérisant du fait que le mélange combustible se réchauffe à l'aide de la chaleur produite par le moteur.

4. Le moteur de combustion avec les déplacements angulaires du rotor (2) d'aller et de retour dans le corps (1) avec deux paires de chambres de travail (4) pour la réalisation du processus de combustion à deux temps avec l'autoinflammation comprend:
- deux chambres de compression (3) qui sont formées par le rotor (2) et le corps du moteur (1) et
- deux chemins (5) réalisés dans le corps du moteur (1) reliés à une chambre de compression (3) et à une chambre de travail (4) de manière que lors du déplacement complet aller - retour du rotor (2) sont réalisées les opérations suivantes:
a) l'aspiration du mélange combustible dans la première chambre de compression (3);
b) l'admission du mélange combustible par les chemins intérieurs du corps du moteur (1) dans la première chambre de travail (4);
c) la compression du mélange combustible dans la chambre de travail (4) jusqu' à l'autoinflammation;
d) la réalisation de la course de travail par la première chambre de travail (4) avec l'échappement ultérieur,
la réalisation des opérations a) - c) dans la deuxième chambre de compression (3) et dans la chambre de travail (4) pendant la course de travail et la répétition des opérations a) - e); les chemins (5) sont situés dans le sens radial hors chambres de compression (3) aussi bien que chambres de travail (4) et les chambres (5) ayant les rainures.

5. Suvant le point 4 le moteur de combustion est **caractérisé** du fait que les la situation des chambres (3,4) est symmetrique pour qu'il n'y ait pas de fermeture forcée entre les pièces particulières.
